# EUROPÄISCHE PATENTSCHRIFT

(11) **EP 3 622 575 B1**
(45) Veröffentlichungstag und Bekanntmachung des Hinweises auf die Patenterteilung: **28.12.2022**
(21) Anmeldenummer: 18729567.0
(22) Anmeldetag: 07.05.2018
(51) Int. Cl.: H01M 4/86, H01M 4/92, B01J 35/00, H01M 4/36, H01M 4/90, H01M 4/62, H01M 8/10

(54) **VERWENDUNG EINES ELEKTRISCH LEITFÄHIGEN KOHLENSTOFFMATERIALS**
USE OF AN ELECTRICALLY CONDUCTIVE CARBON MATERIAL
UTILISATION D'UN MATÉRIAU CARBONE ÉLECTRIQUEMENT CONDUCTEUR

(30) Priorität: 08.05.2017 DE 102017207730
(43) Veröffentlichungstag der Anmeldung: 18.03.2020
(73) Patentinhaber: Bayerische Motoren Werke Aktiengesellschaft, 80809 München (DE)
(72) Erfinder: ORFANIDI, Alin, 80993 München (DE)
(86) Internationale Anmeldenummer: PCT/EP2018/061690
(87) Internationale Veröffentlichungsnummer: WO 2018/206491

(56) Entgegenhaltungen:
- EP-A1- 1 045 467
- TACHIBANA NAOKI ET AL: "Highly porous nitrogen-doped carbon nanoparticles synthesized via simple thermal treatment and their electrocatalytic activity for oxygen reduction reaction", CARBON, ELSEVIER, OXFORD, GB, Bd. 115, 16. Januar 2017 (2017-01-16), Seiten 515-525, XP029924135, ISSN: 0008-6223, DOI: 10.1016/J.CARBON.2017.01.034
- WANG ZEJIE ET AL: "Progress of air-breathing cathode in microbial fuel cells", JOURNAL OF POWER SOURCES, ELSEVIER SA, CH, Bd. 356, 13. Februar 2017 (2017-02-13), Seiten 245-255, XP085025247, ISSN: 0378-7753, DOI: 10.1016/J.JPOWSOUR.2017.02.004
- MARTÍNEZ-HUERTA M V ET AL: "Electrocatalysts for low temperature fuel cells", CATALYSIS TODAY, ELSEVIER, AMSTERDAM, NL, Bd. 285, 21. Februar 2017 (2017-02-21), Seiten 3-12, XP029942232, ISSN: 0920-5861, DOI: 10.1016/J.CATTOD.2017.02.015

## Beschreibung

Die vorliegende Erfindung betrifft die Verwendung eines elektrisch leitfähigen Kohlenstoffmaterials in einer Katalysatorschicht für eine Brennstoffzelle.

Brennstoffzellen sind Energieerzeugungssysteme, die z.B. durch eine elektrochemische Umsetzung von Wasserstoff und Sauerstoff elektrische Energie erzeugen. Eine Brennstoffzelle umfasst hierbei meist mehrere, übereinander gestapelte Einzelzellen, wobei jede Einzelzelle üblicherweise eine Kathode, eine Anode und zwischen diesen Elektroden eine Membran umfasst. Die Kathoden und Anoden sind hierbei die katalytisch aktiven Schichten der Einzelzellen und werden auch als Katalysatorschichten bezeichnet. Sie flankieren auf je einer Seite die Membran und enthalten katalytisch aktives Material, das kohlenstoffgeträgert ist. Als Bindemittel, und auch zur Verbesserung der Protonenleitfähigkeit, wird das kohlenstoffgeträgerte katalytisch aktive Material üblicherweise in ein lonomer eingebettet. Eine gute Wechselwirkung zwischen dem lonomer und dem Kohlenstoffträgermaterial wird dann erhalten, wenn das Kohlenstoffträgermaterial durch Stickstoffatome modifiziert ist und somit Amidgruppen, Imidgruppen oder Lactamgruppen als funktionale Seitengruppen enthält. Nachteilig hierbei ist jedoch die Korrosionsanfälligkeit und mangelnde Stabilität dieser modifizierten Kohlenstoffträgermaterialien, insbesondere bei Verwendung in Brennstoffzellen, die in dynamischem Betrieb betrieben werden.

Es ist daher Aufgabe der vorliegenden Erfindung eine Verwendung eines elektrisch leitfähigen Kohlenstoffmaterials anzugeben, das besonders gut in Brennstoffzellenapplikationen eingesetzt werden kann und die Nachteile im Stand der Technik überkommt.

Die Aufgabe wird durch die Verwendung eines spezifischen, stickstoffmodifizierten elektrisch leitfähigen Kohlenstoffmaterials gelöst. Das erfindungsgemäß verwendete Kohlenstoffmaterial weist ein Kohlenstoffgitter auf, das Kohlenstoffatome und Stickstoffatome umfasst. Während in den herkömmlichen stickstoffmodifizierten Kohlenstoffmaterialien, die Stickstoffatome in Form von Amidgruppen, Imidgruppen oder Lactamgruppen umfassen, die Stickstoffatome lediglich als Seitengruppen des Kohlenstoffgitters vorhanden sind, ist in dem erfindungsgemäß verwendeten Kohlenstoffmaterial der Stickstoff, genauer gesagt ein oder mehrere Stickstoffatome, direkt in das Kohlenstoffgitter eingebunden. Der Stickstoff ist also mit anderen Worten Bestandteil des Kohlenstoffgerüsts (Kohlenstoffkristallgitters), das vorteilhafterweise hauptsächlich aus sp²-hybridisierten Kohlenstoffatomen besteht und insbesondere auf Graphit basiert.

Die Erfindung ist die Verwendung eines elektrisch leitfähigen Kohlenstoffmaterials gemäß dem unabhängigen Anspruch 1. Bevorzugte Ausführungen sind in den abhängigen Ansprüche 2 bis 9 definiert.

Die erfindungsgemäße Verwendung sieht hierbei vor, dass das Kohlenstoffmaterial Bestandteil einer Katalysatorschicht für eine Brennstoffzelle ist. Die Katalysatorschicht kann als Anode oder als Kathode ausgebildet sein und ist insbesondere als Kathode ausgebildet. Sie umfasst neben dem Kohlenstoffmaterial mindestens ein katalytisch aktives Material und mindestens ein lonomer, wobei das katalytisch aktive Material eine Brennstoffzellenreaktion katalysiert. Das lonomer dient als Bindemittel und kann zudem auch zur Verbesserung der Protonenleitfähigkeit eingesetzt werden.

Durch die Verwendung des spezifischen, stickstoffmodifizierten Kohlenstoffmaterials wird eine Verbesserung der Verteilung des lonomers in der Katalysatorschicht erzielt. Dies ist auf eine gute elektrostatische Wechselwirkung zwischen den ionischen Gruppen des lonomers und dem Kohlenstoffmaterial zurückzuführen. Durch die Stickstoffmodifikation des Kohlenstoffmaterials im Kohlenstoffgitter wird das Kohlenstoffmaterial polarer. Der Stickstoff kann zudem auch positiv geladen sein, beispielsweise durch Protonierung während der Verarbeitung des Kohlenstoffmaterials zu einer Katalysatortinte oder Katalysatorpaste. Hierdurch kommt es zu starken Coulombwechselwirkungen zwischen dem Stickstoff und den ionischen Gruppen des Ionomers, insbesondere mit anionischen oder zumindest polaren Gruppen des Ionomers, wie z.B. Sulfonsäuregruppen. Durch diese aktive Wechselwirkung lässt sich das lonomer gleichmäßig um das Kohlenstoffmaterial verteilen. Das Kohlenstoffmaterial wird von einer homogenen Schicht an lonomer umgeben.

Dadurch, dass der Stickstoff Bestandteil des Kohlenstoffgitters des Kohlenstoffmaterials ist, findet auch keinerlei Zersetzung des Kohlenstoffmaterials statt. Der Stickstoff ist dauerhaft stabil in das Kohlenstoffgitter eingebettet, so dass weder während der Herstellung der Katalysatorschicht noch bei Betrieb einer Brennstoffzelle, die diese Katalysatorschicht verwendet, Leistungseinbußen durch lonomerverschiebungen, lonomerinhomogenitäten oder Degradation der Katalysatorschicht, beispielsweise durch Korrosion, auftreten. Die Katalysatorschicht ist hierbei einfach herstellbar.

Durch die erfindungsgemäße Verwendung des spezifisch stickstoffmodifizierten Kohlenstoffmaterials kann somit eine Katalysatorschicht mit dauerhaft stabiler und homogener lonomerverteilung erhalten werden, die sich zudem durch eine hohe Korrosionsbeständigkeit und gute Sauerstofftransporteigenschaften, selbst bei dynamischem Betrieb einer Brennstoffzelle, die diese Katalysatorschicht verwendet, auszeichnet. Eine Brennstoffzelle, die eine Katalysatorschicht mit einem lonomer, einem katalytisch aktiven Material und dem spezifisch stickstoffmodifizierten Kohlenstoffmaterial, umfasst, zeichnet sich durch eine hohe Leistungsdichte und Lebensdauer aus, auch wenn sie dauerhaft in einem dynamischen Betrieb betrieben wird.

Die Unteransprüche haben vorteilhafte Weiterbildungen und Ausgestaltungen der Erfindung zum Inhalt.

Gemäß einer vorteilhaften Weiterbildung wird das Kohlenstoffgitter des Kohlenstoffmaterials durch Kohlenstoffatome und Stickstoffatome und optional additiv durch Wasserstoffatome und/oder Sauerstoffatome gebildet. Die Stabilität des Kohlenstoffmaterials und insbesondere seine Korrosionsstabilität können hierdurch effizient verbessert werden. Sofern Wasserstoffatome und/oder Sauerstoffatome vorhanden sind, können diese zur Absättigung der Kohlenstoffatome und/oder Stickstoffatome im Kohlenstoffgitter eingesetzt werden. Alternativ oder additiv können z.B. Wasserstoffatome auch so an ein oder mehrere Stickstoffatome binden, dass der oder die Stickstoffatome eine positive Ladung erhalten. Durch eine positive Ladung am Stickstoffatom wird die Wechselwirkung mit dem lonomer in der Katalysatorschicht verbessert und eine besonders homogene Verteilung des lonomers in der Katalysatorschicht erzielt. Zur Verbesserung der homogenen Verteilung des lonomers in der Katalysatorschicht, und insbesondere zur Förderung einer gleichförmig ausgebildeten lonomerschicht um das Kohlenstoffmaterial, beträgt ein Anteil an Stickstoff in dem Kohlenstoffmaterial 0,3 bis 1,0 Masse%, bezogen auf die Gesamtmasse des Kohlenstoffmaterials.

Ein insbesondere gegenüber Degradationsreaktionen besonders stabiles Kohlenstoffmaterial wird durch die vorteilhafte Weiterbildung erhalten, in der das Kohlenstoffgitter Pyridineinheiten und/oder Pyrroleinheiten umfasst. Dies ist vermutlich auf den aromatischen Charakter der Pyridin- und Pyrroleinheiten zurückzuführen, wodurch sich Pyridin und Pyrrol sehr gut in das Kohlenstoffgitter und insbesondere in ein Graphit-basiertes Kohlenstoffgitter, einpflegen lässt. Zur Verbesserung der elektrischen Leitfähigkeit und der Stabilität des Kohlenstoffmaterials ist gemäß einer weiteren vorteilhaften Weiterbildung vorgesehen, dass das Kohlenstoffmaterial graphitisiert ist.

Eine besonders gute Leitfähigkeit in der Katalysatorschicht wird dadurch erhalten, dass ein Anteil an Kohlenstoffmaterial in der Katalysatorschicht 25 bis 65 Masse% und insbesondere 35 bis 55 Masse%, bezogen auf die Gesamtmasse der Katalysatorschicht, beträgt.

Aufgrund der hohen katalytischen Aktivität, umfasst das katalytisch aktive Material vorzugsweise mindestens ein Edelmetall, wobei Platin besonders bevorzugt ist. Das Edelmetall kann als Einzelmetall oder aber in Form einer Legierung oder eines Kern-Hülle-Katalysators eingesetzt werden. Beispielhafte legierungsbasierte Edelmetallkatalysatoren umfassend PtPd, PtCo und PtNi.

Dieselben Metalle können auch den Kern-Hülle-Katalysator bilden.

Aufgrund der erfindungsgemäßen Verwendung des spezifisch stickstoffmodifizierten Kohlenstoffmaterials und der damit verbundenen homogenen Ausbildung der Katalysatorschicht, insbesondere im Hinblick auf die Verteilung des Ionomers, kann vorteilhafterweise ein Anteil an katalytisch aktivem Material bei dennoch exzellenter katalytischer Leistung reduziert werden. Dies spart nicht nur Kosten, sondern vereinfacht auch die Herstellung der Katalysatorschicht. Eine vorteilhafte Weiterbildung ist somit dadurch gekennzeichnet, dass ein Anteil an katalytisch aktivem Material, bezogen auf die Gesamtmasse der Katalysatorschicht 0,02 bis 0,4 mg/cm² und insbesondere 0,06 bis 0,1 mg/cm², beträgt.

Ferner vorteilhaft ist das lonomer ausgewählt aus Sulfonsäure-basierten Thermoplasten. Beispielhafte Typen an geeigneten Sulfonsäure-basierten Thermoplasten, wie z.B. PFSA, sind unter dem Handelsnamen "Nafion" von der Firma DuPont oder "Aquivion" von der Firma Solvay oder von Asahi Kasei erhältlich. Durch den Anteil an Sulfonsäuregruppen wird die Wechselwirkung mit dem spezifisch stickstoffmodifizierten Kohlenstoffmaterial verbessert, so dass sich das lonomer besonders gleichmäßig und stabil in der Katalysatorschicht verteilen lässt.

Eine sehr gut stabile und gut protonenleitende Katalysatorschicht mit hoher katalytischer Aktivität lässt sich durch ein Gewichtverhältnis an lonomer zu Kohlenstoffmaterial von 0,2 bis 1,0 und insbesondere 0,25 bis 0,70, erzielen. Liegt das Gewichtsverhältnis in diesem Bereich, wird eine homogene Verteilung des lonomers um das Kohlenstoffmaterial gefördert. Es bildet sich um das Kohlenstoffmaterial eine besonders gleichmäßig dicke Schicht an lonomer. Mit andern Worten liegt somit auch das Kohlenstoffmaterial gleichförmig im lonomer verteilt vor.

Weitere Einzelheiten, Merkmale und Vorteile der Erfindung ergeben sich aus der nachfolgenden Beschreibung und den Figuren. Es zeigt:
- Figur 1: ein schematische Ansicht eines Ausschnitts aus einem Kohlenstoffmaterial gemäß eines Ausführungsform der Erfindung und
- Figur 2: eine schematisierte Darstellung einer Katalysatorschicht gemäß eines Ausführungsform der Erfindung.

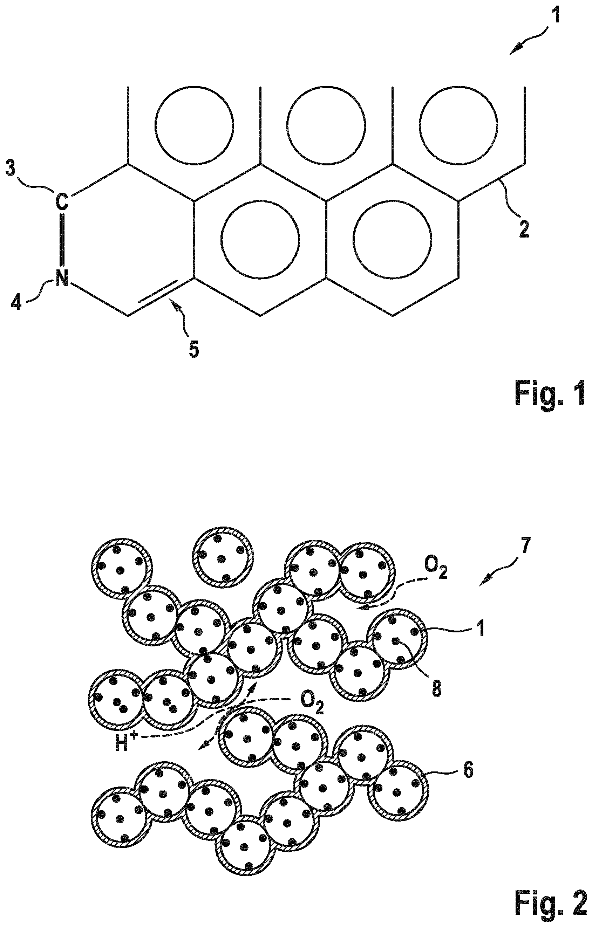

Die vorliegende Erfindung wird anhand eines Ausführungsbeispiels im Detail erläutert. Hierbei sind in Figuren 1 und 2 nur die erfindungswesentlichen Details dargestellt. Alle übrigen Details sind der Übersichtlichkeit halber weggelassen. Ferner beziffern gleiche Bezugszeichen gleiche Elemente.

Figur 1 zeigt im Detail einen Ausschnitt aus einem elektrisch leitfähigen Kohlenstoffmaterial 1, das erfindungsgemäß in einer Katalysatorschicht für eine Brennstoffzelle Anwendung findet, wobei die Katalysatorschicht neben dem Kohlenstoffmaterial 1 mindestens ein lonomer und mindestens ein katalytisch aktives Material umfasst.

Insbesondere zeigt Figur 1 einen Ausschnitt aus dem Kohlenstoffgitter 2 des Kohlenstoffmaterials 1, wobei das Kohlenstoffmaterial 1 graphitisiert ist. Das Kohlenstoffgitter 2 weist hierbei hauptsächlich sp²-hybridisierte Kohlenstoffatome 3 und beispielhaft ein Stickstoffatom 4 auf. Das Stickstoffatom 4 ist direkt in das Kohlenstoffgitter 2 eingebettet, ist also Bestandteil desselben und ist damit dauerhaft stabil und degradationsgeschützt in das Kohlenstoffgitter 2 integriert und nicht nur Bestandteil einer Seitengruppe am Kohlenstoffgitter 2. Das Stickstoffatom 4 ist in Form einer Pyridineinheit 5, also hier beispielhaft in Form eines Pyridinrings, in das Kohlenstoffgitter 2 eingebunden. Der Pyridinring fügt sich hierbei als Aromat, und damit aufgrund seiner Planarität, sehr gut in das Kohlenstoffgitter 2 ein.

Durch das Stickstoffatom 4 wird eine gewisse Polarität in das Kohlenstoffmaterial 1 eingetragen, so dass eine Verteilung des lonomers in der Katalysatorschicht verbessert und zudem eine Stabilität des Kohlenstoffmaterials 1, insbesondere im Hinblick auf Degradationsreaktionen, wie z.B. Korrosionsreaktionen, erhöht wird.

Nachfolgend wird eine beispielhafte Herstellvorschrift für das Kohlenstoffmaterial 1 angegeben:
5 g eines graphitisierten, elektrisch leitfähigen Kohlenstoffmaterials (z.B. graphitisiertes Ketjen Black) wurden für 30 Minuten bei 65 °C unter Rückfluss in 100 ml konzentrierter HNO₃ (70 Masse%) dispergiert. Das erhaltene, oxidierte Kohlenstoffmaterial wurde sodann in heißem Wasser gewaschen, um restliche Spuren an HNO₃ zu entfernen. Im Anschluss daran wurde das Kohlenstoffmaterial in einem Ofen getrocknet. Unter Verwendung eines Röhrenofens wurden 5 g des oxidierten Kohlenstoffmaterials in einem Temperaturbereich zwischen 600 °C und 1000 °C für 2,5 Stunden im Ammoniakstrom (1 L/min) wärmebehandelt. Das mit Ammoniak behandelte Kohlenstoffmaterial wurde anschließend mit heißem Wasser gewaschen, um Reaktionsreste zu entfernen. Anschließend wurde das Kohlenstoffmaterial erneut im Ofen getrocknet. Durch die hohen Temperaturen in einem Temperaturbereich zwischen 600 °C und 1000 °C wurde Stickstoff in das Kohlenstoffgitter eingebunden. Niedrigere Temperaturen führten nicht zu dem gewünschten Einbau von Stickstoff in das Kohlenstoffgitter.

Figur 2 veranschaulicht eine homogene Verteilung eines lonomers 6 in einer Katalysatorschicht 7. Die Katalysatorschicht 7 enthält ein Kohlenstoffmaterial 1, auf dem ein katalytisch aktives Material 8 angeordnet ist. Mit anderen Worten ist katalytisch aktives Material 8 kohlenstoffgeträgert. Das Kohlenstoffmaterial 1 ist zudem von gleichförmigen Schichten an lonomer 6 umgeben und wird, aufgrund der guten Wechselwirkung (insbesondere Coulombwechselwirkung) zwischen dem Kohlenstoffmaterial 1 und dem lonomer 6 insbesondere allseitig homogen von lonomer 6 umgeben. Somit wird neben der Stabilität und Protonenleitfähigkeit auch die Sauerstoffleitfähigkeit bzw. Sauerstofftransporteigenschaft in der Katalysatorschicht 7 dauerhaft verbessert.

### Bezugszeichenliste:

- 1: Kohlenstoffmaterial
- 2: Kohlenstoffgitter
- 3: Kohlenstoffatom
- 4: Stickstoffatom
- 5: Pyridineinheit
- 6: lonomer
- 7: Katalysatorschicht
- 8: katalytisch aktives Material

## Patentansprüche

1. Verwendung eines elektrisch leitfähigen Kohlenstoffmaterials (1) in einer Katalysatorschicht (7) für eine Brennstoffzelle, umfassend das Kohlenstoffmaterial (1), mindestens ein katalytisch aktives Material (8) und mindestens ein lonomer (6), zur Verbesserung einer Verteilung des lonomers (6) in der Katalysatorschicht (7), wobei das Kohlenstoffmaterial (1) ein Kohlenstoffgitter (2) aufweist, das Kohlenstoffatome (3) und Stickstoffatome (4) umfasst,
wobei ein Anteil an Kohlenstoffmaterial (1) in der Katalysatorschicht (7) 25 bis 65 Masse%, bezogen auf die Gesamtmasse der Katalysatorschicht (7), beträgt und/oder
wobei ein Gewichtverhältnis von lonomer (6) zu Kohlenstoffmaterial (1) 0,2 bis 1,0 beträgt und
wobei ein Anteil an Stickstoff (4) in dem Kohlenstoffmaterial (1) 0,3 bis 1,0 Masse%, bezogen auf die Gesamtmasse des Kohlenstoffmaterials (1), beträgt.

2. Verwendung nach Anspruch 1, wobei das Kohlenstoffgitter (2) des Kohlenstoffmaterials (1) durch Kohlenstoffatome (3) und Stickstoffatome (4) und optional additiv durch Wasserstoffatome und/oder Sauerstoffatome gebildet wird.

3. Verwendung nach einem der vorhergehenden Ansprüche, wobei das Kohlenstoffgitter (2) Pyridineinheiten (6) und/oder Pyrroleinheiten umfasst.

4. Verwendung nach einem der vorhergehenden Ansprüche, wobei das Kohlenstoffmaterial (1) graphitisiert ist.

5. Verwendung nach einem der vorhergehenden Ansprüche, wobei ein Anteil an Kohlenstoffmaterial (1) in der Katalysatorschicht (7) 35 bis 55 Masse%, bezogen auf die Gesamtmasse der Katalysatorschicht (7), beträgt.

6. Verwendung nach einem der vorhergehenden Ansprüche, wobei das katalytisch aktive Material (8) mindestens ein Edelmetall und insbesondere Platin, umfasst.

7. Verwendung nach einem der vorhergehenden Ansprüche, wobei ein Anteil an katalytisch aktivem Material (8) bezogen auf die Gesamtmasse der Katalysatorschicht (7) 0,02 bis 0,4 mg/cm², insbesondere 0,06 bis 0,1 mg/cm², beträgt.

8. Verwendung nach einem der vorhergehenden Ansprüche, wobei das lonomer (6) ausgewählt ist aus Sulfonsäure-basierten Thermoplasten.

9. Verwendung nach einem der vorhergehenden Ansprüche, wobei ein Gewichtverhältnis von lonomer (6) zu Kohlenstoffmaterial (1) 0,25 bis 0,70, beträgt.

## Claims

1. Use of an electrically conductive carbon material (1) in a catalyst layer (7) for a fuel cell, comprising the carbon material (1), at least one catalytically active material (8) and at least one ionomer (6), for improving a distribution of the ionomer (6) in the catalyst layer (7), where the carbon material (1) has a carbon lattice (2) which comprises carbon atoms (3) and nitrogen atoms (4),
where a fraction of carbon material (1) in the catalyst layer (7) is 25 to 65 mass%, based on the total mass of the catalyst layer (7), and/or
where a weight ratio of ionomer (6) to carbon material (1) is 0.2-1.0, and
where a fraction of nitrogen (4) in the carbon material (1) is 0.3 to 1.0 mass%, based on the total mass of the carbon material (1).

2. Use according to Claim 1, where the carbon lattice (2) of the carbon material (1) is formed by carbon atoms (3) and nitrogen atoms (4) and optionally additively by hydrogen atoms and/or oxygen atoms.

3. Use according to either of the preceding claims, where the carbon lattice (2) comprises pyridine units (6) and/or pyrrole units.

4. Use according to any of the preceding claims, where the carbon material (1) is graphitized.

5. Use according to any of the preceding claims, where a fraction of carbon material (1) in the catalyst layer (7) is 35 to 55 mass%, based on the total mass of the catalyst layer (7).

6. Use according to any of the preceding claims, where the catalytic reactive material (8) comprises at least one noble metal and more particularly platinum.

7. Use according to any of the preceding claims, where a fraction of catalytically active material (8), based on the total mass of the catalyst layer (7), is 0.02 to 0.4 mg/cm², more particularly 0.06 to 0.1 mg/cm².

8. Use according to any of the preceding claims, where the ionomer (6) is selected from sulfonic acid-based thermoplastics.

9. Use according to any of the preceding claims, where a weight ratio of ionomer (6) to carbon material (1) is 0.25-0.70.

## Revendications

1. Utilisation d'un matériau carboné (1) conducteur de l'électricité dans une couche de catalyseur (7) pour une pile à combustible, comprenant le matériau carboné (1), au moins un matériau catalytiquement actif (8) et au moins un ionomère (6), pour améliorer une répartition de l'ionomère (6) dans la couche de catalyseur (7), le matériau carboné (1) comprenant une grille de carbone (2), qui comprend des atomes de carbone (3) et des atomes d'azote (4),
une proportion du matériau carboné (1) dans la couche de catalyseur (7) étant de 25 à 65 % en masse par rapport à la masse totale de la couche de catalyseur (7) et/ou
un rapport en poids de l'ionomère (6) au matériau carboné (1) étant de 0,2 à 1,0 et
une proportion d'azote (4) dans le matériau carboné (1) étant de 0,3 à 1,0 % en masse par rapport à la masse totale du matériau carboné (1).

2. Utilisation selon la revendication 1, la grille de carbone (2) du matériau carboné (1) étant formée d'atomes de carbone (3) et d'atomes d'azote (4) et éventuellement d'une manière additive par des atomes d'hydrogène et/ou des atomes d'oxygène.

3. Utilisation selon l'une des revendications précédentes, la grille de carbone (2) comprenant des motifs pyridine (6) et/ou des motifs pyrroléine.

4. Utilisation selon l'une des revendications précédentes, le matériau carboné (1) étant graphitisé.

5. Utilisation selon l'une des revendications précédentes, une proportion du matériau carboné (1) dans la couche de catalyseur (7) étant de 35 à 55 % en masse par rapport à la masse totale de la couche de catalyseur (7).

6. Utilisation selon l'une des revendications précédentes, le matériau catalytiquement actif (8) comprenant au moins un métal noble, et en particulier du platine.

7. Utilisation selon l'une des revendications précédentes, une proportion du matériau catalytiquement actif (8) par rapport à la masse totale de la couche de catalyseur (7) étant de 0,02 à 0,4 mg/cm², en particulier de 0,06 à 0,1 mg/cm².

8. Utilisation selon l'une des revendications précédentes, l'ionomère (6) étant choisi parmi les thermoplastiques à base d'acide sulfonique.

9. Utilisation selon l'une des revendications précédentes, un rapport en poids de l'ionomère (6) au matériau carboné (1) étant de 0,25 à 0,70.
